# EUROPEAN PATENT APPLICATION

(11) **EP 3 547 551 A1**
(43) Date of publication of application: **02.10.2019**
(21) Application number: 19173007.6
(22) Date of filing: 07.02.2005
(51) Int. Cl.: H04B 1/38, H04B 1/74, H04B 1/036

(54) **DIGITAL WIRELESS APPARATUS**

(30) Priority: 13.02.2004 JP 2004037539
(62) Divisional of application: 15150308.3
(71) Applicant: NEC Corporation, Tokyo 108-8001 (JP)
(72) Inventor: Michida, Masaaki, Tokyo, Tokyo 108-8001 (JP)
(74) Representative: Stork Bamberger Patentanwälte PartmbB

(57) **Abstract**

The present invention provides a digital radio apparatus in which heat dissipation can effectively be performed in the apparatus without providing a heat dissipation duct in a shared unit and downsizing of the apparatus can be realized. In a digital radio apparatus installed inside a building, each circuit in a shared unit having CPU and two modulation and demodulation units is integrated, each unit is miniaturized with a board in which an inner via hole is used, and the two modulation and demodulation units are provided in parallel on the shared unit

## Description

### TECHNICAL FIELD

The present invention relates to a digital radio apparatus, and particularly to the digital radio apparatus that is installed inside a building and is used for point-to-point communication.

### BACKGROUND ART

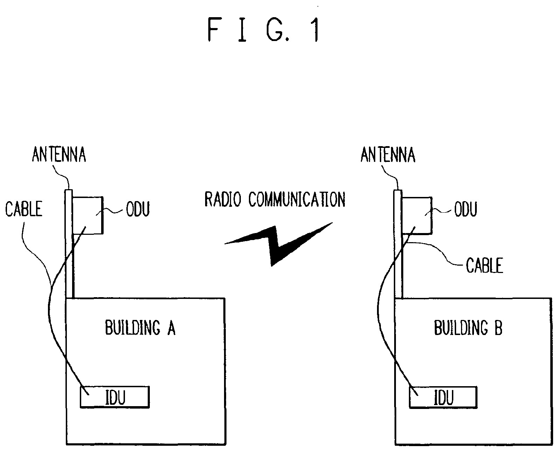

Conventionally, as shown in Fig. 1, ODU (outdoor radio apparatus) is disposed on an antenna and IDU (indoor radio apparatus) is installed in a building A, where IDU is connected to ODU through a cable. The radio communication is performed with a building B in which ODU and IDU are similarly installed.

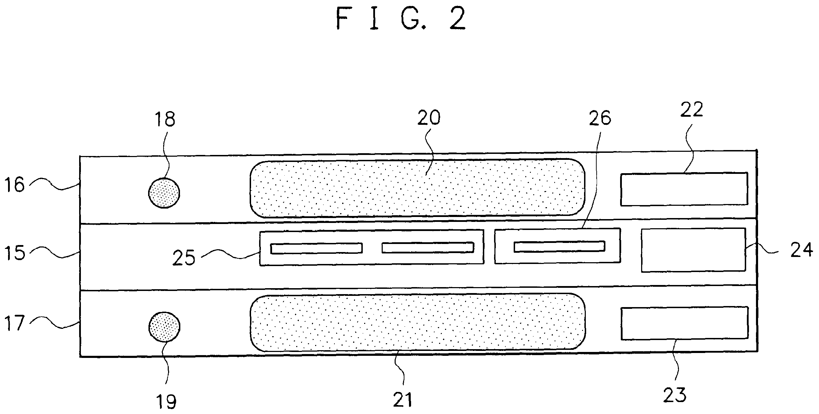

A configuration of IDU installed inside the building and the like will be described below. Fig. 2 is a front view schematically showing a configuration of a (1+1) switching type IDU provided with two modulation and demodulation units including a backup unit used at the time of apparatus failure or degradation of radio line quality. Examples of the (1+1) switching type include a set backup type in which for one radio frequency, two transmitting and receiving devices serving as active use and backup use are switched, and a radio frequency redundancy configuration type in which the radio frequency having better line quality is used from the two radio frequencies used. As shown in Fig. 2, the conventional IDU has a three-layer structure in which modulation and demodulation units 16 and 17 are vertically provided while sandwiching a shared unit 15 located at a central portion.

The shared unit (SW unit) 15 includes connector units 25 and 26 and a duct unit 24. The connector units 25 and 26 are used when a user connects IDU to a device. The duct unit 24 performs the heat dissipation for the apparatus, and the duct unit 24 is provided so as to mainly release the heat in a power supply unit 23 of a bottom MDU unit from the side of the apparatus. In the connector units 25 and 26, the number of connectors can be changed according to the number of main signal channels. The number of connector units is not limited as long as at least one connector unit exists. The top and bottom modulation and demodulation units (MD unit) 16 and 17 include cable connection units 18 and 19, air intake units 20 and 21, and power supply units 22 and 23, respectively. The cable connection units 18 and 19 are used to connect ODU and IDU, and the air intake units 20 and 21 take in air.

In the conventional art, for example, there is a radio communication apparatus mounting structure, in which influence generated by the heat dissipation from the lower side of the radio communication apparatus is avoided by arranging a main board on the upper side of a resin cover for connecting a metal case (for example, see Japanese Patent Application Laid-Open No. H11-74814, hereinafter referred to as Patent Document 1).

### DISCLOSURE OF THE INVENTION

### PROBLEMS TO BE SOLVED BY THE INVENTION

However, in the conventional IDU, because the power supply unit and the like create a large amount of heat in the modulation and demodulation unit, it is necessary to provide an air intake unit and a heat dissipation duct. Therefore, cost is increased, and it takes a long time to build IDU. Furthermore, there is a problem in usability of IDU, because cables must be routed right beside the shared unit 15. That is, in the front face of IDU shown in Fig. 2, the air intake ports are closed when cables are routed from connectors to the upper and lower portions of IDU because the air intake units 20 and 21 are provided above and below the connector units 25 and 26, and the modulation and demodulation units 16 and 17 cannot be exchanged due to the cables because the whole of the modulation and demodulation unit 16 or 17 must be exchanged.

Because IDU is used inside a building, downsizing of the apparatus is required. However, when the air intake unit and the duct are provided for the purpose of the heat dissipation, the configuration of the whole apparatus is restricted. Therefore, the downsizing of the apparatus has been hardly realized.

The technique disclosed in Patent Document 1 is aimed at the structure of a general large-size radio apparatus, and cannot be applied to the structure of the indoor radio apparatus used for the point-to-point communication.

In view of the foregoing, an object of the invention is to provide a digital radio apparatus in which the heat dissipation can effectively be performed while the apparatus is downsized, by forming the modulation and demodulation unit having a half size compared with conventional apparatus so as to realize a double-layer structure in which the two modulation and demodulation units are arranged in parallel on the shared unit.

### MEANS TO SOLVE THE PROBLEM

In order to achieve the above object a digital radio apparatus according to the present invention is characterized in that two modulation and demodulation units are provided in parallel on an upper portion of a shared unit having a baseband main signal interface circuit.

Further, the digital radio apparatus of the invention is characterized in that said modulation and demodulation unit comprises a modulation and demodulation circuit, and the modulation and demodulation circuit is formed by a printed board in which inner via holes are used.

Further, the digital radio apparatus of the invention is characterized in that said modulation and demodulation circuit is integrated.

Further, the digital radio apparatus of the invention is characterized in that said shared unit comprises at least one detachable connector unit.

Further, the digital radio apparatus of the invention is characterized in that said shared unit comprises an MUX circuit and the MUX circuit is integrated.

Further, the digital radio apparatus of the invention is characterized in that said connector unit is commutable to a LAN connection unit.

Further, the digital radio apparatus of the invention is characterized in that a 40-ch E1 (ITU-T G.703 2.048 Mbps) signal is dealt with in said connector unit.

Further, the digital radio apparatus of the invention is characterized in that said shared unit comprises control means for not only setting a device in said digital radio apparatus but conducting communication of monitoring and control information on an outdoor radio apparatus and the control means also controls and monitors an interface unit of the outdoor radio apparatus.

Further, the digital radio apparatus of the invention is characterized in that said interface circuit is formed by a printed board in which inner via hole are used.

Further, the digital radio apparatus of the invention is characterized in that said digital radio apparatus is an indoor digital radio apparatus (IDU).

### EFFECT OF THE INVENTION

According to the invention, the heat dissipation can effectively be performed without providing the heat dissipation duct in the shared unit, and the downsizing of the apparatus can be realized.

### BEST MODE FOR CARRYING OUT THE INVENTION

The best mode for carrying out the invention will be described below with reference to the accompanying drawings.

### EMBODIMENT

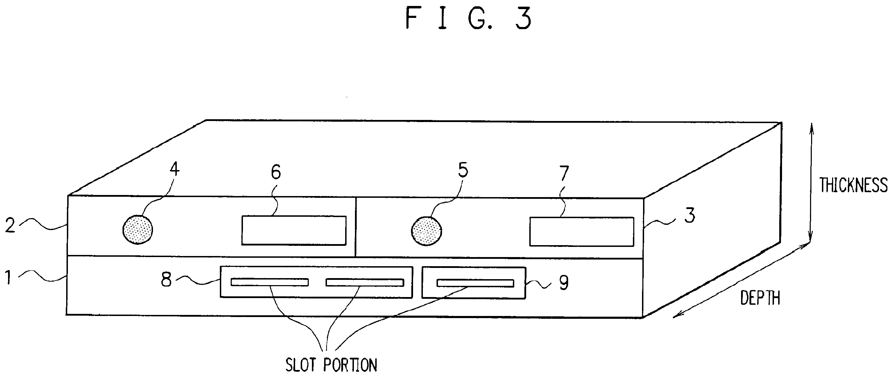

Fig. 3 is a perspective view showing a front face of a digital radio apparatus according to an embodiment of the invention. The digital radio apparatus shown in Fig. 3 is a (1+1) switching type indoor radio apparatus (IDU) used for the point-to-point communication. The (1+1) switching type IDU is provided with two modulation and demodulation units including a backup modulation and demodulation unit.

As shown in Fig. 3, IDU of the embodiment has a double-layer structure in which modulation and demodulation units 2 and 3 are arranged in parallel on a shared unit 1 so as to be at an equal distance from the shared unit 1. Each of the modulation and demodulation units 2 and 3 has half a width of the conventional unit. The modulation and demodulation units 2 and 3 have a thickness thinner than that of the conventional three-layer structure IDU shown in Fig. 2 by one unit of the conventional three-layer structure IDU.

The shared unit 1 includes a connector unit 8 and a connector unit 9. The connector unit 8 includes two baseband bipolar signal slot portions for a digital leased line in the front face. Fig. 3 shows a connector configuration through which 40-ch E1 (ITU-T G.703 2.048 Mbps) signals are interfaced. A user connects the cable from the connector units 8 and 9 to an arbitrary communication device. The connector units 8 and 9 are detachable, and can be changed to a LAN connection unit. Although the E1 signal is used in the embodiment, a T1 signal (ANSI standard) may be used. The invention is not limited to the E1 signal or the T1 signal. Although the number of signals is set at 40-ch in the embodiment, the number of signals is not limited to this.

The modulation and demodulation units 2 and 3 include cable connection units 4 and 5 and power supply units 6 and 7, respectively. The cable connected to the outdoor radio apparatus (ODU) is connected to each of the cable connection units 4 and 5. The heat generated in the power supply unit is dissipated in an upward convection from an air ventilation hole made on an upper-surface chassis of the modulation and demodulation unit. An air inlet hole (not shown) is made on a side-face chassis of the modulation and demodulation unit. As a result, the heat generated in the apparatus is naturally dissipated from the upper portion of the power supply unit. Therefore, in IDU of the invention, it is not necessary to provide the heat dissipation duct inside or outside the apparatus.

In IDU of the embodiment, the cable connection unit of the modulation and demodulation unit and the power supply unit are configured to be detachable. Consequently, IDU of the embodiment can be changed to a (1+0) type IDU having a 1U structure in which a backup modulation and demodulation unit is not included (see Figs. 4 and 5). For example, as shown in Figs. 6A and 6B, in the conventional IDU, the shared unit is formed in an upright shape. Therefore, the conventional IDU cannot be changed to the (1+0) type IDU.

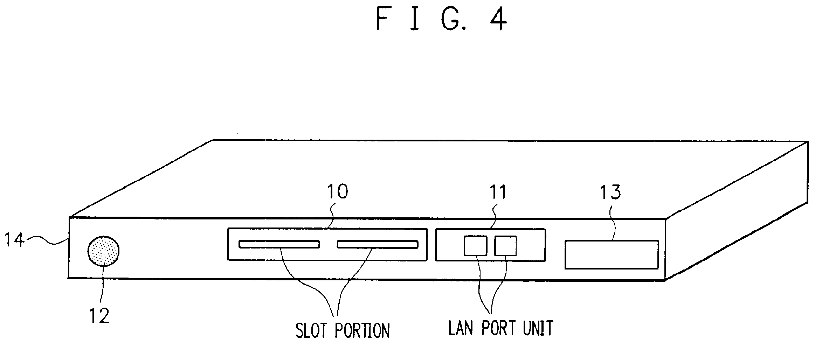

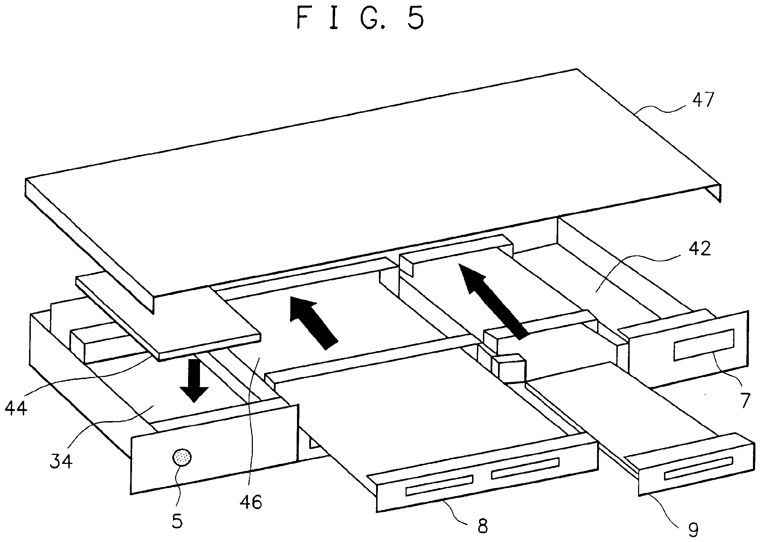

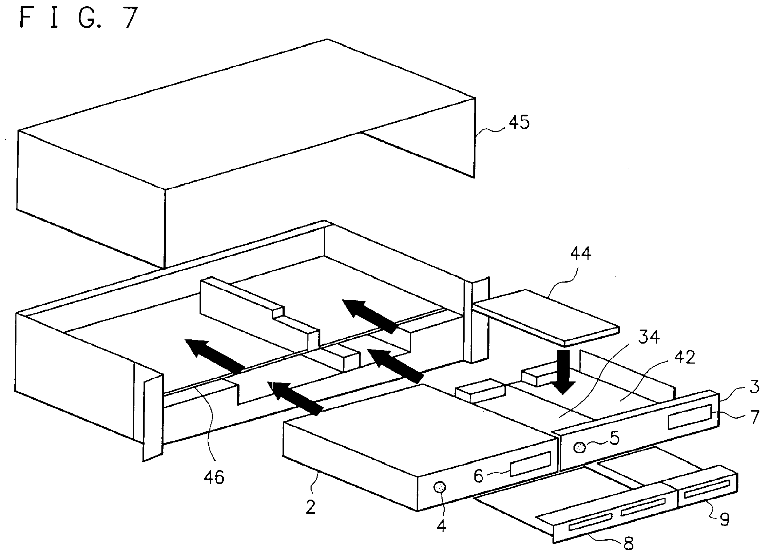

In (1+1) IDU of the embodiment, for example, as shown in Fig. 7, the modulation and demodulation units 2 and 3 and the connector units 8 and 9 are configured to be detachable. ODU-INTFC circuits 43 and 44, DC-DC-CONVs 41 and 42, MODEMs 29 and 34, cable connection units 4 and 5, and power supply units 6 and 7 are also detachable in the modulation and demodulation units 2 and 3. Therefore, in (1+1) IDU of the embodiment, each detachable unit of the modulation and demodulation unit 3 of Fig.7 can be detached to change (1+1) IDU to (1+0) IDU as shown in Fig. 5. In changing the configuration, the connector unit 9 may be changed to the LAN connection unit (LAN port unit) (see Fig. 4). In this way, compatibility between the (1+1) type IDU and the (1+0) type IDU can be realized and structural convenience is achieved.

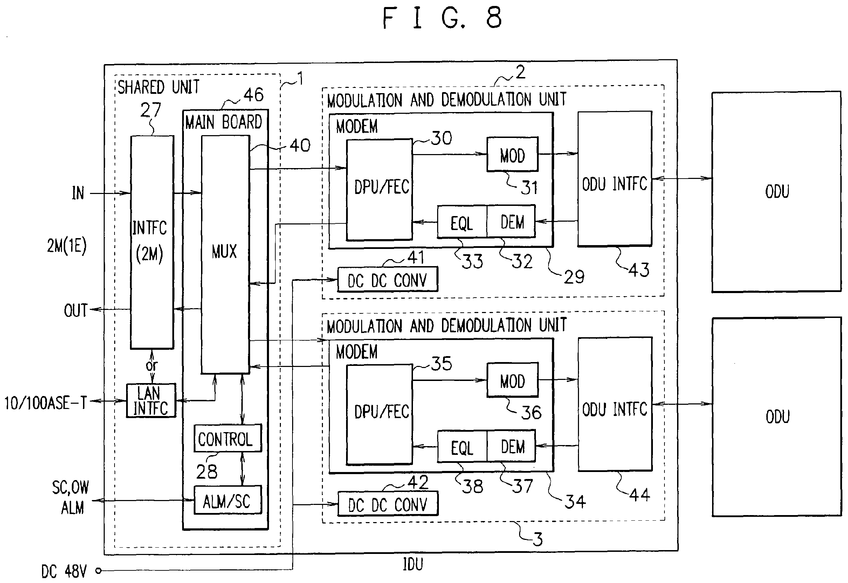

Fig. 8 is a block diagram showing an internal configuration of the (1+1) type indoor radio apparatus (IDU) of the embodiment. Arrows in Fig. 8 indicate signal flows.

As shown in Fig. 8, the shared unit 1 (SW unit) has a connector and LIU (Line Interface Unit). The baseband bipolar signal for the digital leased line is inputted to and outputted from the connector and LIU. The SW unit 1 includes an INTFC circuit, an MUX circuit, a CONTROL circuit, and an ALM/SC circuit. The INTFC circuit is an exchangeable module. The MUX circuit multiplexes and separates N inputted channels (N: 40ch in the embodiment). The CONTROL circuit controls and monitors the radio apparatus. The ALM/SC circuit interfaces a warning state of the radio apparatus and an auxiliary signal that is transmitted and is added to a main signal.

The modulation and demodulation unit (MD unit) 2 includes a modulation and demodulation circuit (MODEM) 29, an ODU-INTFC circuit 43, and DC-DC-CONV 41. MODEM 29 performs error correction, and modulation and demodulation. ODU-INTFC circuit 43 overlaps three kinds of signal, namely ODU electric power, a control signal and a modulation and demodulation signal, and acts as an interface. DC-DC-CONV 41 makes intra-secondary power source from a primary power source supplied from an installation place. The modulation and demodulation unit 3 has the similar configuration. IDU having the above configuration is connected to ODU installed outside the building.

An INTFC (Interface) circuit 27 has the connector and LIU (Line Interface Unit). The connector and LIU (Line Interface Unit) transmit the E1 bipolar signal regulated by ITU-T (ITU-T G.703 standard) or the like, or the connector and LIU (Line Interface Unit) input and output the T1 signal of ANSI standard. The connector and LIU (Line Interface Unit) are formed as an exchangeable unit. Therefore, the interface of a LAN (100 BASE-TX/10 BASE-T) signal is also performed by exchanging the connector and LIU (Line Interface Unit) to a module having a LAN signal connector and a LAN interface circuit.

An MUX (Multiplex) circuit 40 includes a main-signal transmission circuit, an auxiliary-signal transmission circuit, a transmission signal branch circuit, and a reception signal switching circuit. The main-signal transmission circuit performs stuff multiplexing (transmission side) and separation (reception side) of each channel baseband signal that is converted into an NRZ signal by the INTFC circuit. The main-signal transmission circuit also performs multiplexing (transmission side) and separation (reception side) of the LAN (100 BASE-TX/10 BASE-T) signal, and transmits the LAN signal. The auxiliary-signal transmission circuit overlaps various control information signals such as circuit information and radio apparatus control information in a radio signal transmission interval. The transmission signal branch circuit branches the signal transmitted to the two modulation and demodulation units in the (1+1) configuration. The reception signal switching circuit switches and selects the demodulated signals received from the modulation and demodulation units in the (1+1) configuration. The main-signal transmission circuit, the auxiliary-signal transmission circuit, the transmission signal branch circuit, and the reception signal switching circuit are integrated in the embodiment.

CONTROL 28 is an IDU control means. CONTROL 28 performs device setting in IDU, namely performs necessary setting for IDU, conducts communication of monitoring and control information on ODU, and controls and monitors ODU-INTFC. For example, CONTROL 28 performs the control to increase a transmission output level of the other station when an electric field level of an RF (radio frequency) reception signal is decreased lower than a predetermined value, and CONTROL 28 performs the control to decrease the transmission output level of the other station when the reception level is higher than the predetermined value and the line quality is stabilized. Conventionally, in order to perform the communication of the ODU monitoring and control information, and the control and monitoring of ODU-INTFC, the control circuit is provided in each modulation and demodulation unit (MD unit). The control circuit including CPU controls the transmission device and the reception device. In the conventional method, for example, communication is required in order to synchronize control circuits in modulation and demodulation units, and a communication circuit for the synchronization is also needed in each modulation and demodulation unit. On the contrary, the modulation and demodulation units 2 and 3 do not have the control circuit that is conventionally used. Accordingly, because the communication circuit is not needed, the modulation and demodulation units 2 and 3 are simplified. For example, the modulation and demodulation units 2 and 3 are formed by a firmware storage memory and a control CPU.

MODEMs 29 and 34 are a modulation and demodulation circuit, and include DPU/FECs 30 and 35, respectively. DPU/FECs 30 and 35 have a DPU (Digital Processing Unit) function and an FEC (Forward Error Collection) Encode/Decode function. The DPU function includes a multiplexing and separation process of a control signal against a main signal, a string conversion process, and a signal speed conversion process. DPU/FECs 30 and 35 are integrated in the embodiment. MODEMs 29 and 34 include MOD (Modulation) circuits 31 and 36 and DEM (Demodulation) circuits 32 and 37, respectively. The MOD circuits 31 and 36 are a digital signal modulation circuit in which the signal is modulated by QPSK, QAM, or the like. The DEM circuits 32 and 37 are a demodulation circuit in which the signal is modulated by QPSK, QAM, or the like. DEM/EQL is also integrated.

The ODU-INTFC circuits 43 and 44 overlap three kinds of signal, namely ODU electric power, a control signal and a modulation and demodulation signal, on one cable to act as an interface. The DC-DC-CONVs 41 and 42 make the intra-secondary power source from the primary power source supplied from the installation place, and supply the electric power to each unit in the apparatus and ODU.

Thus, each circuit is integrated in IDU of the embodiment, so that IDU can deal with the 40-channel signal which is larger than the conventional number of channels.

The boards for the circuits included in MODEMs 29 and 34 are formed by multilayer printed boards in which an inner via hole is used (hereinafter referred to as multilayer printed board). The inner via hole is a hole which does not pierce through all the layers of the multilayer printed board but is made only between an Nth layer and an (N+1) th layer in order to extract signals. When the inner via hole is used, dead space is decreased, which allows miniaturization of a printed board, high-density wiring, and wiring shortening. For example, the inner via hole is effective in using LSI having a BGA (Ball Grid Array) pin arrangement. That is, the backside of the printed board in which the inner via hole is used has no through hole which is made in using a through via hole. Therefore, in the use of the inner via hole, components such as a by-pass capacitor can be arranged on the backside of LSI, so that high-density packaging can be realized. Inter-IC-pin signal number restriction can maximally be utilized because interference is decreased between the through via holes, so that the number of layers of the printed board is consequently decreased.

In the embodiment, electric components such as a capacitor, a resistor, a coil, and IC mounted on the board are connected by inner via holes, which allows the area of one multilayer printed board to be reduced by about 50% compared with the conventional through via hole. The inner via hole is mainly used in mobile communication terminals such as a mobile telephone. Although the multilayer printed board is used for the MODEM unit circuit in the embodiment, the multilayer printed board may be used for each circuit in the shared unit.

Thus, in IDU of the embodiment, each circuit is integrated in the modulation and demodulation unit, each circuit is formed by the multilayer printed board, and CPU is provided only in the shared unit. As a result, the modulation and demodulation unit has half the size of the modulation and demodulation unit of the conventional IDU. Not only the modulation and demodulation unit is miniaturized, but also the width and depth of the shared unit can be decreased by integrating a MUX circuit and the like of the shared unit. Therefore, the downsizing of the apparatus can be realized as a whole. For example, the conventional apparatus has the size of about 482(W)x133(H)x300(D). On the other hand, the size of IDU of the embodiment can be decreased up to about 439(W)x88(H)x230(D). The size of the IDU of the embodiment is shown by way of example only, and the invention is not limited to this size.

According to the digital radio apparatus of the embodiment of the invention, the modulation and demodulation unit is formed in the half size of the conventional modulation and demodulation unit, the digital radio apparatus has the double-layer structure in which the modulation and demodulation units are arranged in parallel on the shared unit, and the double-layer structure of the digital radio apparatus is thinner than the conventional apparatus having the three-layer structure. Therefore, the downsizing can be realized in the digital radio apparatus.

Additionally, according to the digital radio apparatus of the embodiment, because the two modulation and demodulation units are arranged at the top of the digital radio apparatus to be able to dissipate the heat in the apparatus upward, it is not necessary to provide the heat dissipation duct. Therefore, the time and cost necessary to produce a heat dissipation duct can be eliminated.

Additionally, according to the digital radio apparatus of the embodiment, the connector unit of the shared unit is configured to be detachable, and the connector unit can be applied to the (1+0) type digital radio apparatus, so that the apparatus-configuration compatibility can be realized.

Additionally, according to the digital radio apparatus of the embodiment, circuits in the shared unit and the modulation and demodulation unit can be integrated to deal with the 40-channel signals larger than the conventional 16-channel signals.

Because the modulation and demodulation unit is arranged below the connector unit of the shared unit in the conventional IDU, in the case where impedance conversion or connector conversion is required, it is necessary to provide a cable to an arbitrary interface unit (converter). On the other hand, according to the digital radio apparatus of the embodiment, IDU has the configuration in which the shared unit is arranged at the bottom, so that the connector can be connected to the interface unit without a cable.

In the structure of the conventional radio apparatus shown in Fig. 8, a cable that connected the shared unit and the outdoor unit only stretches sideward from the shared unit. However, according to the digital radio apparatus of the embodiment, a cable can be connected downward, and the usability is improved.

Although the embodiment of the invention is described above, the invention is not limited to the embodiment. Various modifications could be made without departing from the scope of the invention.

### BRIEF DESCRIPTION OF THE DRAWINGS

Fig. 1 is a schematic view showing a communication configuration of digital radio apparatuses;
Fig. 2 is a front view showing an appearance of a front face of a conventional digital radio apparatus;
Fig. 3 is a perspective view showing an appearance of a front face of a digital radio apparatus according to an embodiment of the present invention;
Fig. 4 is a perspective view showing an appearance of a front face of another digital radio apparatus according to another embodiment of the present invention;
Fig. 5 is a perspective view showing an internal configuration of a (1+0) digital radio apparatus according to an embodiment of the present invention;

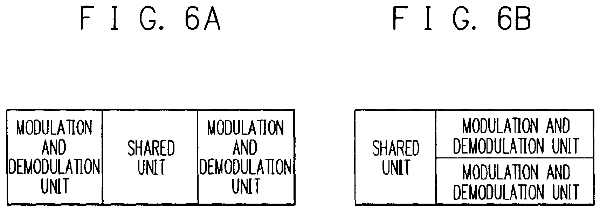

Fig. 6 is a schematic diagram showing a configuration of the conventional digital radio apparatus;
Fig. 7 is a perspective view showing an internal configuration of a (1+1) digital radio apparatus according to an embodiment of the present invention; and
Fig. 8 is a block diagram showing a configuration of a digital radio apparatus according to an embodiment of the present invention.

### DESCRIPTION OF REFERENCE NUMERALS

- 1, 14, and 15: shared unit
- 2, 3, 16, and 17: modulation and demodulation unit
- 4, 5, 12, 18, and 19: cable connection unit
- 6, 7, 13, 22, and 23: power supply unit
- 8, 9, 10, 11, 25, and 26: connector unit
- 20 and 21: air intake unit
- 24: duct unit
- 27: INTFC
- 28: CONTROL
- 29 and 34: MODEM
- 30 and 35: DPU/FEC
- 31 and 36: MOD
- 32 and 37: DEM
- 33 and 38: EQL
- 40: MUX circuit
- 41 and 42: DC-DC-CONV
- 43 and 44: ODU-INTFC
- 45 and 47: upper cover
- 46: main board

## Claims

1. An indoor digital radio apparatus comprising:
a shared unit (1) that includes a baseband main signal interface circuit, and
two modulation and demodulation units (2, 3) that are provided in parallel on an upper portion of the shared unit (1),
**characterized in that**
the two modulation and demodulation units (2, 3) and the shared unit (1) are configured to be detachable, the indoor digital radio apparatus enables to change from (1+1) type in which the two modulation and demodulation units (2, 3) are provided in parallel on an upper portion of the shared unit (1) into (1+0) type in which the one modulation and demodulation unit (3) is arranged parallelly in the shared unit (1), by removing the one modulation and demodulation unit (2) and transferring the one modulation and demodulation unit (3) so as to be arranged parallelly in the shared unit(1).

2. The indoor digital radio apparatus according to claim 1, **characterized in that** a modulation and demodulation unit (2, 3) comprises a modulation and demodulation circuit (31, 32), and is formed by a printed board in which inner via holes are used.

3. The indoor digital radio apparatus according to claim 2, **characterized in that** the modulation and demodulation circuit (31, 32) is integrated.

4. The indoor digital radio apparatus according to claim 1, **characterized in that** the shared unit (1) comprises at least one detachable connector unit (8, 9).

5. The indoor digital radio apparatus according to claim 1 or 4, **characterized in that**
the shared unit (1) comprises an MUX circuit (40) and the MUX circuit (40) is integrated.

6. The indoor digital radio apparatus according to claim 4, **characterized in that**
the connector (8, 9) unit is commutable to a LAN connection unit

7. The indoor digital radio apparatus according to claim 4 or 6, **characterized in that**
a 40-ch E1 (ITU-T G. 703 2.048 Mbps) signal is dealt with in the connector (8, 9) unit

8. The indoor digital radio apparatus according to claim 1, **characterized in that**
the shared unit (1) comprises control means (28) for not only setting a device in the indoor digital radio apparatus but conducting communication of monitoring and control information on an outdoor radio apparatus, the control means (28) also controlling and monitoring an interface unit of the outdoor radio apparatus.

9. The indoor digital radio apparatus according to claim 5, **characterized in that**
the interface circuit is formed by a printed board in which inner via holes are used.

10. The indoor digital radio apparatus according to claim 1, **characterized in that**
two modulation and demodulation units (2, 3) includes cable connection units (4, 5) which are adapted to connect the indoor digital radio apparatus and an outdoor radio apparatus by a cable.

11. The indoor digital radio apparatus according to claim 1, **characterized in that**
an upper surface chassis of the each modulation and demodulation units (2, 3) includes a ventilation hole.
